# NEW EUROPEAN PATENT SPECIFICATION

(11) **EP 0 379 947 B2**
(45) Date of publication and mention of the opposition decision: **09.09.1998**
(45) Mention of the grant of the patent: 30.03.1994
(21) Application number: 90100869.8
(22) Date of filing: 17.01.1990
(51) Int. Cl.: G21C 3/16

(54) **Fuel rod for use in a nuclear fuel assembly**
Brennstab für den Einsatz in Kernbrennstabbündel
Crayon de combustible pour un assemblage de combustible nucléaire

(30) Priority: 27.01.1989 US 302500
(43) Date of publication of application: 01.08.1990
(73) Proprietor: WESTINGHOUSE ELECTRIC CORPORATION, Pittsburgh Pennsylvania 15222 (US)
(72) Inventor: Freeman, Thomas Raphael, Columbia, South Carolina 15223 (US)
(74) Representative: Gallo, Wolfgang, Dipl.-Ing. (FH)

(56) References cited:
- EP-A- 0 093 901
- DE-A- 2 127 240
- US-A- 4 687 629

## Description

The present invention relates generally to fuel assemblies for a PWR nuclear reactor and, more particularly, to fuel rods for use therein.

In a typical pressurized water nuclear reactor (PWR), the reactor core includes a large number of fuel assemblies each of which is composed of a plurality of elongate fuel elements or rods transversely spaced apart from one another. The fuel rods contain fissile material and are grouped together in an array organized to provide a neutron flux in the core sufficient to support a high rate of nuclear fission and, thus, the release of a large amount of energy in the form of heat. A liquid coolant is pumped upwardly through the core in order to extract some of the heat generated in the core for the production of useful work.

The fissile material contained in each fuel rod is typically enriched uranium (for example, uranium which has 40 weight percent U-235 in U-238) provided in the form of a stack of fuel pellets. The reaction which produces energy in a nuclear reactor is the neutron-induced fission of enriched uranium atoms. However, neutrons released at the opposite ends of the fuel stack have a greater probability of escaping from the core than do neutrons in the portion of the fuel rod between the ends. Because these escaped or leaked neutrons can no longer produce fission events, neutron leakage is wasteful and expensive and should be reduced.

Due to the escape of a greater proportion of neutrons at the opposite ends of the fuel rod, the distribution of fission-inducing neutrons is approximately cosinosoidal along the axis of the fuel rods. As a result, the depletion of fissile fuel, or burnup, distribution along the length of a fuel rod is nonuniform, the ends of the rod receiving less burnup than the center. This is inefficient utilization of the enriched uranium in the fuel rod ends. Since more than 70% of the total fuel cycle cost is devoted to buying and enriching uranium in order to ensure that there is enough available to maintain the fission chain reaction, schemes which can reduce the number of neutrons escaping from the core will result in significant economic benefits.

One well-known approach to reducing neutron leakage and inefficiency resulting therefrom is to create axial blankets at the top and bottom of the fuel rods by substituting pellets of natural uranium (i.e., uranium which has 0.71 weight percent U-235 in U-238) for pellets of enriched uranium in short regions at both ends of the fuel rod. In the VANTAGE+ PWR fuel rods manufactured and marketed by the assignee of the present invention, axial blanket pellets typically are in the form of solid right cylinders, although annular axial blanket pellets are available for use, if desired, to provide more space for fission gas release. By way of example in the VANTAGE + PWR fuel assembly, each fuel rod is about 3.65 m long, each region of axial blanket natural uranium pellets adjacent each opposite end is 15.25 cm long, and the remainder of the pellet stack of enriched uranium between the axial blankets is 3.35 min length. Since these axial blankets contain less uranium 235, they give up fewer neutrons to leakage from the core.

Axial blankets reduce neutron leakage approximately 50% and function to generate plutonium by the absorption of neutrons. Because plutonium is fissile material, the blanket pellets improve the burnup distribution somewhat. However, axial blankets release fewer neutrons at the beginning of life (BOL) than toward the end of life (EOL) of the core when more plutonium is generated. This means that there is more neutron leakage in the case of axial blankets at EOL than at BOL which is just the opposite of what is desirable.Thus, even fuel rods using axial blankets at their opposite ends fail to achieve full burnup, and thus they attain less than optimum fuel utilization at such locations.

Another approach, disclosed in EP-A-0093901 corresponding to US-A-4,493,814 likewise assigned to the assignee of the present invention, is to substitute in place the pellets in an inner axial region of each axial blanket and in an outer axial region of each opposite end of the remaining standard pellets a row of low density fuel pellets. The remaining pellets between the low density pellets can be standard density fuel pellets. For example, now the axial blankets will each be about 10 cmin length, each rod of low density pellets will be about 10 cm long, and the remaining standard pellets in between will be 3.25 m in length. These low density pellets could be hollow annular pellets, lower density pellets, smaller pellets or some other design reducing the uranium loading per unit ength. The uranium 235 enrichment of these low density pellets would typically be the same as the standard enriched uranium pellets of the rod. This latter approach is believed to improve neutron flux distribution and consequently the resulting burnup distribution and utilization of uranium over the use of axial blankets alone. While provision of the low density pellets in US-A-4493814 appears to be a step in the right direction, the approach still fails to reach optimum results in terms of uranium burnup and utilization.

Still another approach, disclosed in U. S. Patent US-A-4,687,629 assigned to the assignee of the present invention, is to provide a fuel rod with a complete stack of annular fuel pellets having the same U-235 enrichment and different annulus sizes for graduated enrichment loading. This approach, designed with a boiling water nuclear reactor (BWR) fuel rod in mind is not seen as providing an optimum design for uranium burnup and utilization in a PWR fuel rod.

Consequently, it is the principal object of the invention to provide further improvements holding out promise for optimal results.

Unlike the prior art PWR fuel rod of EP-A-0093901 the fuel rod according to the invention has no axial blanket regions of natural uranium fuel pellets at its opposite ends. Furthermore, unlike conventional PWR fuel rods and unlike the BWR fuel rod of US-A-4687629, the fuel rod of the invention does not require a long plenum chamber between its upper end plug and the stack of fuel pellets therebeneath, and therefore has no need for a plenum spring or other stack-constraining structure, thereby allowing for increased pellet-stack length. Moreover, the fuel rod according to the invention approaches an optimum result in terms of fuel burnup and utilization without requiring change to every fuel pellet in the stack thereof.

A preferred embodiment of the invention will now be described, by way of example only, with reference to the attached drawings, in which:-
Fig. 1 is an elevational view, partly in section, of a conventional PWR fuel assembly in which the fuel rods of the invention are intended to be employed, the assembly being illustrated in vertically foreshortened form and with parts broken away for clarity;
Fig. 2 is an enlarged, longitudinally foreshortened, axial sectional view of a conventional fuel rod;
Fig.3 is an enlarged, longitudinally foreshortened, axial sectional view of a fuel rod representing another embodiment of the invention;
Fig. 4. is an enlarged cross-sectional view of a natural uranium blanket fuel pellet, taken along line 4--4 of Fig 2;
Fig 5. is an enlarged cross-sectional view of an enriched-uranium standard fuel pellet taken along line 5--5 of Fig. 2;
Fig.6 is an enlarged cross-sectional view of an enriched-uranium annular fuel pellet having another void size, taken along line 6--6 of Fig. 3,
Fig.7 is an enlarged axial sectional view of an enriched uranium standard fuel pellet;
Fig.8 is an enlarged axial sectional view of an enriched uranium annular fuel pellet having said one void size;
Fig. 9 is an enlarged axial sectional view of an enriched uranium annular fuel pellet having said other void size;
Fig. 10 is a cross-sectional view taken along line 10-10 of Fig. 7;
Fig. 11 is a cross-sectional view taken along line 11-11 of Fig. 8; and
Fig. 12 is a cross-sectional view taken along line 12-12 of Fig. 9.

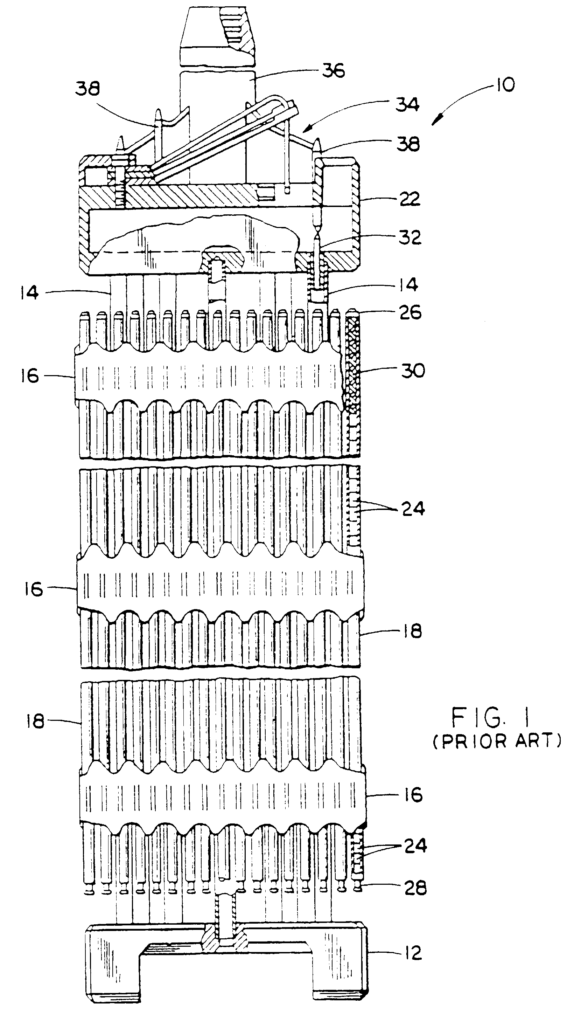

Referring now to the drawings, and particularly to Fig. 1, the fuel assembly illustrated therein and designated generally with numeral 10 comprises basically a lower end structure or bottom nozzle 12 for supporting the assembly on the lower core plate (not shown) in the core region of a reactor (not shown), several guide tubes or thimbles 14 extending longitudinally upward from the bottom nozzle 12, transverse grids 16 spaced axially along the guide thimbles 14, an organized array of elongate fuel rods 18 transversely spaced and supported by the grids 16, an instrumentation tube 20 located in the center of the fuel assembly, and an upper end structure or top nozzle 22 attached to the upper ends of the guide thimbles 14. Each of the fuel rods 18 contains nuclear fuel pellets 24 and has its opposite ends hermetically sealed by means of end plugs 26,28. Commonly, a plenum spring 30 is disposed between the upper end plug 26 and the pellets 24 in order to maintain the pellets firmly stacked within the rod 18. The fuel pellets 24 composed of fissile material are responsible for creating the reactive power in the nuclear reactor. A liquid moderator/coolant, such as water or water containing boron, is pumped upwardly through the fuel assemblies of the core in order to extract heat therefrom for the purpose of producing useful work.

In order to control the fission process, control rods 32 are reciprocally movable in the guide thimbles 14 located at predetermined positions within the fuel assembly 10. Specifically, the top nozzle 22 includes a rod cluster control mechanism 34 having an internally threaded cylindrical member 36 from which radially extend flukes or arms 38 having the control rods 32 connected thereto, the control mechanism 34 being operable to axially move the control rods 32 within the guide thimbles 14, all as well known in the art.

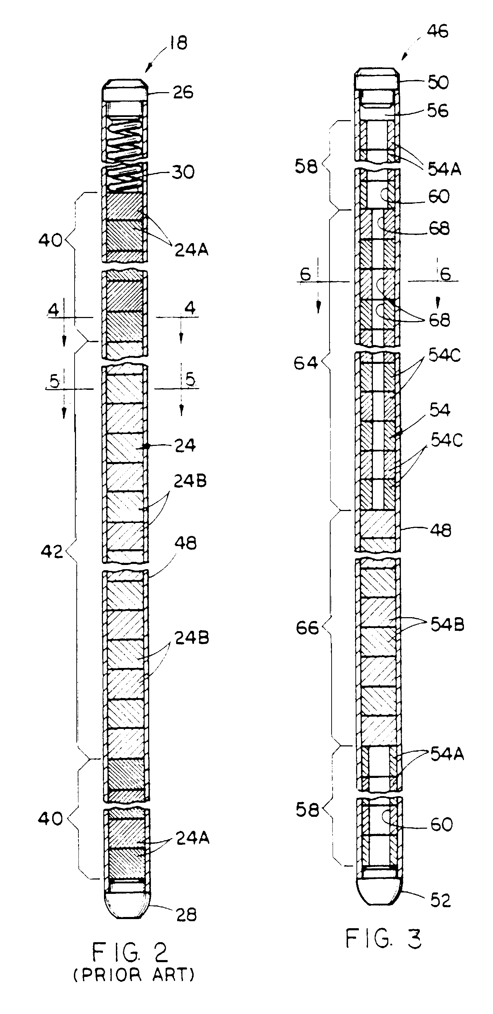

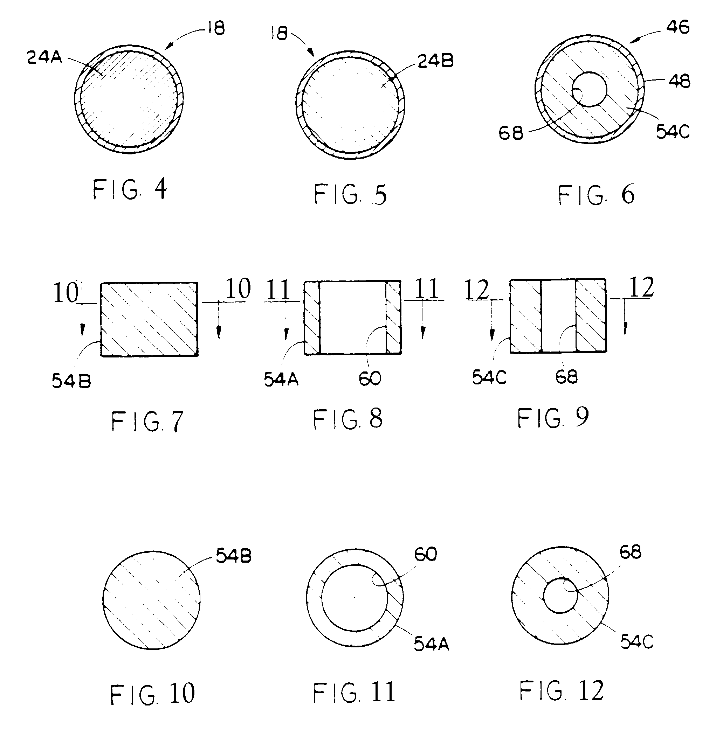

As shown in Fig. 2, the fuel pellets 24 in the conventional fuel rod 18 are organized into pellets 24A disposed in opposite end regions 40 of the stack, and pellets 24B disposed in a middle region 42 thereof. The pellets 24A in the opposite end regions of the stack are composed of natural uranium dioxide (see also Fig. 4), and thus they represent what hereinbefore has been described as axial blankets. The pellets 24B in the middle or intermediate region 42 of the stack are composed of enriched uranium dioxide (see also Fig.5), and thus they are what hereinbefore has been described as standard pellets.

Referring now to Fig. 3 illustrating a preferred embodiment of the invention, the fuel rod 46 shown therein is similar to the fuel rod 18 in Fig. 2 inasmuch as it includes an elongate hollow cladding tube 48, and a pair of end plugs 50, 52 which seal the cladding tube 48 at opposite ends thereof.

In accordance with the invention, the fuel rod 46 contains fuel pellets 54 which are stacked to extend between the end plugs 50, 52 at the opposite ends of the cladding tube 48, and all of which are composed of fissile material having a single enrichment, such as uranium which has 4.0 weight percent U-235 in U-238. Moreover, the fuel rods 46 has therein no plenum and no plenum spring; instead, the fuel pellets 54 in fuel rod 46 form a stack having a length slightly less than the distance between the end plugs 50, 52 at the opposite ends of the cladding tube 48. Thus, when the cladding tube 48 is disposed in a vertical orientation, the stack of pellets 54 rests, at its lower end, upon the lower end plug 52 and, at an upper end, is spaced below the upper end plug 50 by a gap 56. The gap 56 is devoid of any structure, such as a plenum spring, for restraining the upper end of the stack of pellets 54 from movement toward the upper end plug 50.

The arrangement of axial regions of pellets 54 in the fuel rod 46 of Fig. 3 includes second and third axial regions 64, 66 defined, in tandem with respect to one another, between the first axial regions 58. The pellets 54C in the second axial region 64 of the fuel rod 46 have substantially identical annular configurations with an annulus 68 of a second void size (Figs. 3, 6, 9 and 12) smaller than the first void size of the annulus 60 of the pellets 54A in the first axial regions 58. The second void size of each pellet 54C in the second axial region 64 is about ten percent of the volume of the pellet 54C. The pellets 54B in the third axial region 66 have solid configurations.

Thus, the fuel rod 46 includes four axial regions 58, 64, 66 of pellets 54. Three of these four regions are different. All regions include pellets of enriched fuel, and two of the three types are annular. Usually, the enrichment of all the regions is the same. Besides the fact that some of the fuel pellets 54 are annular, another important feature about the fuel pellet stack resides in that it is about 12.5 cm longer than the fuel stack in the prior art fuel rod 18 of Fig. 2.

With respect to fuel rod 46, there are four main reasons for providing the annular pellets 54A in the first axial regions 58 at the opposite ends of the pellet stack, which is to say, at the opposite ends of the reactor core.

First, the annular pellets 54A add plenum volume to the fuel rods which is necessary because the normal plenum at the top of the stack of pellets 24 such as utilized in the prior-art fuel rod 18 of Fig. 2 is greatly reduced because of the longer fuel stack in fuel rod 46.

Second, the annular pellets 54 provide an increase in the thermal flux at the ends of the core which is desirable in order to increase the burnup of the enriched fuel in these end regions 58. To get a significant increase, it is necessary to make a significant change in the H/U ratio. About a factor of two change was made.

Third, as a result of the change in the H/U ratio, the fuel in these regions burns out faster than it normally would and, because there is less fuel there to begin with, the amount of power produced by the ends of the core at EOL is low which makes this a low axial leakage fuel.

Fourth, at BOL, just the opposite is true. The relative power at the ends of the core is higher than it would normally be (this is the reason the regions burn out faster). This higher power leads to a lower peaking factor in the core since the rest of the core can supply somewhat less power

With respect to the fuel rod 46. there are three principal reasons for providing the annular pellets 54C in the second axial region 64 in the top half of the core below the top end axial region 58 at the upper end of the reactor core.

First, the annular pellets 54C add plenum volume to make up for that portion of the plenum at the top of the pellet stack that is lost because of the longer pellet stack.

Second, the annular pellets 54C improve LOCA (loss-of-coolant accident) margin. This is produced in two ways, namely, (a) pellet temperatures are reduced because of the presence of the annulus, and this reduction in the pellet average temperature means that the stored energy of the pellet is less, which is the LOCA benefit; and (b) because there is less fuel in the top half of the core, there is less power produced there. Since there is more LOCA margin in the bottom of the core, it is advantageous to provide relatively more power there. This makes a better match of power to margin.

Third, due to the use of the annular pellets 54C, fuel is removed from the top half of the core, whereby the H/U ratio is increased in the top half of the core which results in a fuel cycle cost (FCC) benefit. This is better than a uniform H/U change made to the whole core because it produces a better match to the actual water density in the core which decreases with height in the core.

With respect to the fuel rod 46, there are two principal reasons for providing the standard solid pellets 54B in the third axial region 66 in the bottom half of the core above the bottom end axial region 58 at the bottom end of the reactor core.

First, more of the fuel in the fuel rod is located where the water is denser which is a FCC benefit. The match to optimum H/U ratio is better.

Second, more fuel at the bottom tends to move the power where there is more LOCA margin.

Furthermore, even though the plenum volume at the top of the fuel rod 46 has been decreased (from about 17.75 cm to about 5 cm) because the pellet stack has been lengthened, the actual plenum volume in the core is increased by about a factor of two; and even though there is a fuel stack length increase of about 12.7 cm in the fuel rod 46, the mass of fuel in the fuel rods is decreased because of the increase in plenum volume by the annular pellets 54A, 54C. This mass decrease does not mean that less energy can be obtained from an assembly using these rods, for the reason that the annular design burns the fuel more uniformly so that the average burnup of the rod can go up without the peak burnup increasing. For example, the annular end axial regions 58 of the rod 46 produce more power per unit length than the axial blanket regions 40 of the conventional fuel rod 18. This means also that the peak U-235 enrichment required in the first axial regions 58 of the rod 46 will be less than in comparable rods. Thus, in spite of the reduced fuel mass, there will be produced more energy per unit fuel mass, which will make it somewhat easier to design cores with high burnup and reduced region size.

Finally, because the top plenum region in each of the fuel rod 46 is a gap 56 having a length (less than 5 cm) which is insufficient for the stack of fuel pellets 54, upon axial movement thereof within the cladding tube 48, to attain acceleration involving a risk of damage to the fuel pellets 54 upon impact of the stack against either of the end plugs 50, 52, a spring, clip or other structure is not needed to constrain motion of the stack of fuel pellets. Of course, eliminating the need for such a spring, clip or other motion-constraining structure greatly simplifies the manufacturing process and also results in a small further increase in plenum size.

## Claims

1. A PWR nuclear fuel rod (44 or 46) including an elongate cladding tube (48) which contains a stack of fuel pellets (54) and is sealed at opposite ends thereof by two end plugs (50,52), wherein all of the fuel pellets (54) contained in said cladding tube (48) are composed of fissile material enriched above the level of natural enrichment, and the fuel pellets (54) in said stack are arranged in axial regions including two first axial regions (58) adjacent the opposite ends of the stack, the fuel pellets (54A) in said first axial regions (58) having annular configurations with an annulus (60) of predetermined void size, said fissile material is uranium dioxide having a single U-235 enrichment, the arrangement of axial regions includes second and third axial regions (64,66) which extend, in tandem with respect to each other, between said first axial regions (58), the pellets (54C) in said second axial region having annular configurations with an annulus smaller in void size than the annulus (60) of any pellet (54A) in said first axial regions (58), the pellets (54B) in said third axial region (66) have solid configurations, and said stack of fuel pellets (54) has a length leaving only a small gap (56) between the stack and the end plug (50) which is on the upper end of the cladding tube (48) when the fuel rod is in an upright position, said gap (56) being devoid of any structure.

2. A nuclear fuel rod according to claim 1, characterized in that the fuel pellets (54A) in said first axial regions (58) are identical in number.

3. A nuclear fuel rod (44; 46) according to claim 1 or 2, characterized in that the void size of each pellet (54A) in said first axial regions (58) is about 40% of the volume of said pellet (54A).

4. A nuclear fuel rod (46) according to any of claims 1 to 3, characterized in that the void size of each pellet (54C) in said second axial region (58) is about 10% of the volume of said pellet (54C).

## Patentansprüche

1. Druckwasserreaktor-Kernbrennstab (44 bzw. 46) mit einem länglichen Hüllrohr (48), das einen Stapel aus Brennstofftabletten (54) enthält und an seinen beiden Enden mittels zweier Endstopfen (50, 52) verschlossen ist, wobei sämtliche im Hüllrohr (48) enthaltene Brennstofftabletten (54) aus spaltbarm Material bestehen, das über den Pegel der natürlichen Anreicherung hinaus angereichert ist, und wobei die Brennstofftabletten (54) in dem Stapel in axialen Bereichen angeordnet sind, die zwei erste axiale Bereiche (58) an den beiderseitigen Enden des Stapels enthalten, in denen die Brennstofftabletten (54A) ringförmige Konfigurationen mit einem Ring (60) vorgegebener Hohlraumgröße haben, wobei weiter das spaltbare Material Urandioxid mit einfacher U-235-Anreicherung ist, wobei ferner die Anordnung der axialen Bereiche zweite und dritte axiale Bereiche (64, 66) umfaßt, die in gegenseitiger Tandemanordnung zwischen den ersten axialen Bereichen (58) verlaufen, und wobei die Tabletten (54C) in dem zweiten axialen Bereich ringförmige Konfigurationen mit einem Ring mit kleinerer Hohlraumgröße als dem Ring (60) irgendeiner Tablette (54A) in den ersten axialen Bereichen (58) haben, und wobei die Tabletten (54B) in den dritten axialen Bereich (66) massive Konfigurationen haben, und wobei schließlich der Stapel aus Brennstofftabletten (54) eine Länge aufweist, die nur einen kleinen Spalt (56) zwischen dem Stapel und dem Endstopfen (50) am oberen Ende des Hüllrohrs (48) hat, wenn der Brennstab sich in aufrechter Position befindet, wobei der Spalt (56) keinerlei Bauteile enthält.

2. Kernbrennstab nach Anspruch 1, dadurch gekennzeichnet, daß die Brennstofftabletten (54A) in den genannten ersten axialen Bereichen (58) gleiche Anzahl haben.

3. Kernbrennstab (44; 46) nach Anspruch 1 oder 2, dadurch gekennzeichnet, daß die Hohlraumgröße jeder Tablette (54A) in den genannten ersten axialen Bereichen (58) etwa 40% des Volumens der Tablette (54A) beträgt.

4. Kernbrennstab (48) nach einem der Ansprüche 1 bis 3, dadurch gekennzeichnet, daß die Hohlraumgröße jeder Tablette (54C) in dem zweiten axialen Bereich (58) etwa 10% des Volumens der Tablette (54C) beträgt.

## Revendications

1. Barre (44 ou 46) de combustible nucléaire pour réacteurs à eau sous pression comprenant un long tube de gainage (48) qui contient un empilement de pastilles (54) de combustible et est fermé de façon étanche à ses extrémités opposées par deux bouchons d'extrémité (50, 52) dans laquelle toutes les pastilles (54) de combustible contenues dans ledit tube de gainage (48) sont composées d'un matériau fissile enrichi au dessus du niveau d'enrichissement naturel, et les pastilles (54) de combistible dudit empilement sont disposées dans des régions axiales comprenant deux premières régions axiales (58) adjacentes aux extrémités opposées de l'empilement, les pastilles (54A) de combustible dans lesdites premières régions axiales (58) ayant des configurations annulaires avec un anneau (60) ayant une dimension prédéterminée de partie vide, ledit matériau fissile est du dioxyde d'uranium ayant le même enrichissement en U-235, l'agencement de régions axiales comprend des seconde et troisième régions axiales (64, 66) qui s'étendent, en série l'une avec l'autre, entre lesdites premières régions axiales (58), les pastilles (54C) dans ladite seconde région axiale ayant des configurations annulaires avec un anneau d'une dimension plus petite de partie vide de l'anneau (60) de toute pastille (54A) se trouvant dans lesdites premières régions axiales (58), et les pastilles (54B) se trouvant dans ladite troisième région axiale (66) ont des configrations pleines, et dans laquelle ledit empilement de pastilles (54) de combustible a une longueur ne laissant qu'un faible intervalle (56) entre l'empilement et le bouchon d'extrémité (50) qui se trouve sur l'extrémité supérieure de tube de gainage (48) lorsque la barre de combustible se trouve en position verticale, ledit intervalle (56) étant exempt de toute structure.

2. Barre de combustible nucléaire selon la revendication 1, caractérisée en ce qu'un même nombre de pastilles (54A) de combustible est présent dans lesdites premières régions axiales (58).

3. Barre de combustible nucléaire (44; 46) selon la revendication 1 ou 2, caractérisée en ce que la dimension de partie vide de chaque pastille (54A) se trouvant dans lesdites premières régions axiales (58) représente environ 40% du volume de ladite pastille (54A).

4. Barre de combustible nucléaire (46) selon l'une quelconque des revendications 1, 3 ou 3, caractérisée en ce que la dimension de partie vide de chaque pastille (54C) se trouvant dans ladite seconde région axiale (58) représente environ 10% du volume de ladite pastille (54C).
